# EUROPÄISCHE PATENTANMELDUNG

(11) **EP 3 757 408 A1**
(43) Veröffentlichungstag der Anmeldung: **30.12.2020**
(21) Anmeldenummer: 20175132.8
(22) Anmeldetag: 18.05.2020
(51) Int. Cl.: F16B 37/08, F16B 5/02

(54) **BOLZENAUFNAHME**

(30) Priorität: 26.06.2019 DE 102019117232
(71) Anmelder: Illinois Tool Works Inc., Glenview, IL 60025 (US)
(72) Erfinder: Pfeiffer, Christian, Glenview, IL 60025 (US)
(74) Vertreter: HGF

(57) **Zusammenfassung**

Die vorliegende Erfindung betrifft ein Bolzenaufnahme (1) zur verriegelnden Aufnahme und Befestigung an einen Bolzen (12), wobei die Bolzenaufnahme zumindest zwei Rastmittel zum verrastenden Festlegen des Bolzens aufweist, wobei ein erstes Rastmittel ein Sägezahnprofil mit zumindest einem Zahn ist, welches fest angeordnet ist und ein zweites Rastmittel ein Rückhaltearm (20) ist, der bezogen auf eine Längsachse eines Bolzens dem ersten Rastmittel diametral gegenüberliegend angeordnet ist und derart angelenkt ist, dass er lateral auf das erste Rastmittel hin und von diesem weg schwenkbar angeordnet ist.

## Beschreibung

Die Erfindung betrifft eine Bolzenaufnahme nach dem Oberbegriff des Anspruchs 1.

Es ist bekannt, insbesondere in Kraftfahrzeugen, elektrische Leitungen, Flüssigkeitsleitungen und dergleichen, aber auch andere Bauteile an der Karosserie anzuordnen. Hierzu sind insbesondere Bolzen entwickelt worden, die an der Karosserie angeschweißt, angeklebt, angenietet oder in anderer Weise befestigt werden und dann von einem Karosserieblech vorstehen. Um an diesen Bolzen entsprechend Bauteile oder Halterungen für Bauteile anzuordnen, sind sogenannte Bolzenaufnahmen vorhanden.

Bei den Bolzen handelt es sich um stabförmige Körper, die nach Art einer Schraube mit einem Gewinde versehen sind und auf die insofern etwas aufgeschraubt werden kann.

Bolzenaufnahmen haben gegenüber Schrauben den Vorteil, dass sie nicht aufgeschraubt werden, sondern aufgesteckt werden. Hierzu besitzen Bolzenaufnahmen entsprechende Halteeinrichtungen, die sich an den Gewindegängen des Bolzens abstützen.

Es ist bei Bolzenaufnahmen einerseits wichtig, dass die Rückhaltekräfte, die die Bolzenaufnahme am Bolzen halten, groß genug sind, dass die Bolzenaufnahme nicht unerwünscht vom Bolzen abreißt, andererseits ist es wichtig, dass die Rückhaltekräfte auch dauerhaft vorliegen.

Bekannte Bolzenaufnahmen arbeiten beispielsweise mit einer Vielzahl von Lamellen, welche sich am Bolzen abstützen, jedoch keine besonders hohen Abreißkräfte gewährleisten.

Darüber hinaus sind sogenannte Quick-on-Fastener bekannt, welche jedoch aus mehreren Teilen zusammengesetzt aufgebaut sind.

Aufgabe der Erfindung ist es, eine Bolzenaufnahme zur Montage an Bolzen, wie Fahrzeugbolzen oder Luftfahrzeugbolzen, zu schaffen, welche eine zuverlässige Verbindung mit dem Bolzen bei hohen Abreißkräften und einer verbesserten Dauerlastbeständigkeit ermöglicht. Die Aufgabe wird mit einer Bolzenaufnahme mit den Merkmalen des Anspruchs 1 gelöst.

Die erfindungsgemäße Bolzenaufnahme besitzt zumindest eine massive Wand, auf der ein Sägezahnprofil ausgebildet ist, welches dazu geeignet ist, in die Gewindegänge eines Bolzens einzugreifen.

Der massiven Wand gegenüber und damit auch gegenüber dem Sägezahnprofil befindet sich ein flexibler Rückhaltearm, der mit einer Kraft auf die massive Wand zu vorgespannt ist bzw. der von der Wand mit einem Abstand beabstandet ist, der geringer ist, als der Durchmesser eines Bolzens. Dem Sägezahnprofil zugewandt ist der Rückhaltearm ebenfalls so profiliert, dass er mit Profilabschnitten in die Gewindegänge des Bolzens eingreift.

Zudem besitzt die erfindungsgemäße Bolzenaufnahme zumindest eine Einstecköffnung, durch die ein Bolzen in den Bereich zwischen dem Sägezahnprofil und dem Rückhaltearm gelangen kann.

Vorzugsweise sind beidseitig des Sägezahnprofils an der massiven Wand Führungslappen ausgebildet, welche eine seitliche Führung des Bolzens gewährleisten, so dass dieser nicht aus dem Bereich des Sägezahnprofils und des Rückhaltearms gelangen können.

Diese Führungslappen können dabei versetzt zueinander bezogen auf die Einsteckrichtung des Bolzens angeordnet sein, was es ermöglicht, die Bolzenaufnahme in einfacher Weise, zum Beispiel in Spritzgusswerkzeugen, aus einem einheitlichen Material einstückig herzustellen.

Bodenseitig, d.h. benachbart zur Einstecköffnung und an einer Bodenplatte der Bolzenaufnahme ausgebildet, ist zumindest ein Blattfederelement vorhanden, welches zur Außenseite bzw. zu einer Unterseite der Bodenplatte hin ausgewölbt angeordnet ist und nach dem Einstecken eines Bolzens auf der Fläche aufliegt, an der der Bolzen befestigt ist und eine Kraft ausübt, die gegen die Einsteckrichtung des Bolzens gerichtet ist.

Hierdurch wird erfindungsgemäß eine vordefinierte Auszugskraft permanent auf die Bolzenaufnahme aufgebracht, die dazu führt, dass der Rückhaltearm stärker in die Gewindegänge des Bolzens hineingezogen wird und dabei auch den Bolzen in das Sägezahnprofil der gegenüberliegenden Wand hineindrückt und hierdurch die hohen Auszugskräfte, die von außen auftreten können, sicherstellt.

Außerdem wird hierdurch sichergestellt, dass durch auftretende Vibrationen Schläge oder Ähnliches die Verbindung zwischen dem Bolzen und der Bolzenaufnahme nicht ungewünscht geöffnet wird oder nachgibt. Somit ist bei der Erfindung von Vorteil, dass eine Bolzenaufnahme geschaffen wird, die in einfacher und kostengünstiger Weise herstellbar ist und dabei eine sehr hohe Verbindungssicherheit auch auf Dauer sicherstellt. Zudem sind die Abreißkräfte höher als bei bekannten Konstruktionen, wobei zum Lösen der Verbindung gleichwohl die Bolzenaufnahme auch vom Bolzen abgeschraubt werden kann.

Die Erfindung betrifft dabei insbesondere eine Bolzenaufnahme zur verriegelnden Aufnahme und Befestigung an einen Bolzen, wobei die Bolzenaufnahme zumindest zwei Rastmittel zum verrastenden Festlegen des Bolzens aufweist, wobei ein erstes Rastmittel ein Sägezahnprofil mit zumindest einem Zahn ist, welches fest angeordnet ist und ein zweites Rastmittel ein Rückhaltearm ist, der bezogen auf eine Längsachse eines Bolzens dem ersten Rastmittel diametral gegenüberliegend angeordnet ist und derart angelenkt ist, dass er lateral auf das erste Rastmittel hin und von diesem weg schwenkbar angeordnet ist.

Hierbei ist von Vorteil, dass eine zuverlässige Festlegung bei einfachem Aufbau erzielt wird. Vorteilhaft kann es sein, wenn das erste Rastmittel über einen oder mehrere Zähne verfügt, wobei das Profil sich entlang der Einsteckrichtung mit in Einsteckrichtung aufeinanderfolgenden Zähnen erstreckt.

Ferner kann das zweite Rastmittel dem ersten Rastmittel zugewandt zumindest ein Eingriffsmittel zum Eingriff in ein Gegeneingriffsmittel des Bolzens besitzen.

Weiter kann es von Vorteil sein, wenn die Zähne des Sägezahnprofils einen Abstand voneinander aufweisen, die dem Abstand der Gewindekämme eines einzusteckenden Bolzens im Wesentlichen entspricht.

Zudem ist von Vorteil wenn bei einer Mehrzahl von Eingriffsvorsprüngen am Rückhaltearm als zweites Eingriffsmittel, die Abstände der Scheitel der Eingriffsvorsprünge dem Abstand der Gewindekämme im Wesentlichen entspricht oder an diesen angepasst ist.

Zudem kann der Abstand der Zähne zueinander einerseits und der Abstand der Eingriffsvorsprünge zueinander andererseits sowie die Position der Eingriffsvorsprünge zu den Zähnen andererseits im verriegelten Zustand so angeordnet sein, dass sowohl die Zähne mit ihren Zahnkanten einerseits als auch die Eingriffsvorsprünge mit ihren Scheiteln andererseits in die Gewindegänge eines einzusteckenden Bolzens eingreifbar angeordnet sind.

Vorteilhaft kann es sein, dass die Zähne über eine lange Flanke und über eine kurze steile Flanke verfügen, wobei in Einsteckrichtung zunächst die lange Flanke sich bis zu einer Zahnkante lateral in einen Aufnahmeraum für einen Bolzen erstreckt und anschließend eine kurze Flanke folgt, welche in Einsteckrichtung über eine stärkere Steigung verfügt.

Ferner ist es günstig, wenn die Eingriffsvorsprünge in Einsteckrichtung zunächst eine längere Flanke besitzen und nach dem Scheitel eine kürzere steilere Flanke folgt.

Weiter kann es von Vorteil sein, wenn die Bolzenaufnahme zumindest eine Bodenplatte und eine erste orthogonal zu dieser orientierte Seitenwandung besitzt, wobei an der Seitenwandung das Sägezahnprofil ausgebildet ist und in der Bodenplatte eine Einstecköffnung angeordnet ist.

Zudem ist es möglich, dass der Rückhaltearm benachbart zur Bodenplatte lateral schwenkbar angeordnet ist und sich in Einsteckrichtung lateral und elastisch schwenkbar auf das Sägezahnprofil hin erstreckt.

Ferner kann eine Deckenplatte gegenüber der Bodenplatte vorhanden sein, wobei in der Deckenplatte fluchtend zur Bodenplatte eine Durchstecköffnung für den einzusteckenden Bolzen vorhanden ist.

Vorteilhafterweise kann das Sägezahnprofil mit seinen Zähnen und/oder der Rückhaltearm mit zumindest einem Eingriffsvorsprung in die axiale Flucht zwischen der Einstecköffnung und der Durchstecköffnung hineinragt.

Bei einer möglichen Weiterbildung sind seitlich neben dem Sägezahnprofil Führungslappen angeordnet, welche im Durchschiebeweg des Bolzens von der Einstecköffnung in die Bolzenaufnahme und/oder zur Durchstecköffnung lateral begrenzt.

Von Vorteil kann es sein, wenn ein oder mehr Führungslappen in Einsteckrichtung axial zueinander versetzt und bezüglich der Seiten des Sägezahnprofils alternierend angeordnet sind.

Weiterhin kann es sinnvoll sein, wenn Einführungslappen benachbart zur Einstecköffnung und/oder der Durchstecköffnung angeordnet ist, um einen einzusteckenden Bolzen beim Einstecken und/oder Durchstecken zu führen.

Zudem kann es in einer Weiterbildung vorgesehen sein, an der Bodenplatte benachbart zur Einstecköffnung Federelemente und insbesondere Blattfederelemente vorzusehen, welche sich von der Bolzenaufnahme bogenförmig nach außen erstrecken. Dies ermöglicht eine Anzugskraft aufrecht zu erhalten.

Die Erfindung wird anhand einer Zeichnung lediglich beispielhaft erklärt. Es zeigen dabei:
- Figur 1: stark schematisiert eine beispielhafte Ausführungsform der Bolzenaufnahme mit einem enthaltenen Bolzen in einer perspektivischen Ansicht;
- Figur 2: die Bolzenaufnahme nach Figur 1 in einer Seitenansicht;
- Figur 3: die Bolzenaufnahme in einer perspektivischen Ansicht ohne aufgenommenen Bolzen;
- Figur 4: die Bolzenaufnahme nach Figur 3 in einer perspektivischen Ansicht aus einer gegenüberliegenden Perspektive zu Figur 3;
- Figur 5: die Bolzenaufnahme in einer Ansicht von unten;
- Figur 6: die Bolzenaufnahme in einer seitlichen Ansicht;
- Figur 7: die Bolzenaufnahme in einer Ansicht von oben;
- Figur 8: die Bolzenaufnahme in einer teilgeschnittenen Ansicht auf die profilierte Wandung;
- Figur 9: einen Querschnitt durch die Bolzenaufnahme mit einem aufgenommenen Bolzen;
- Figur 10: die erfindungsgemäße Bolzenaufnahme in einer freigeschnittenen Darstellung als integraler Bestandteil eines größeren Bauelements;
- Figur 11: die Bolzenaufnahme nach Figur 10 in einer weiteren perspektivischen Ansicht;
- Figur 12: die Bolzenaufnahme nach Figur 10 in einer Seitenansicht.

Die Bolzenaufnahme im vorliegenden Beispiel ist im Wesentlichen kastenartig mit einer Bodenwandung, einer Deckenwandung und vier diese Wandungen verbindenden Seitenwandungen ausgebildet.

Dem Fachmann ist jedoch klar, dass jede andere äußere Form der Bolzenaufnahme möglich ist, insbesondere kann die Bolzenaufnahme auch rund ausgebildet sein, vieleckig ausgebildet sein, oval ausgebildet sein oder eine sonstige äußere Raumform haben, solange die noch zu beschreibenden Funktionsteile in ihrer Anordnung zueinander funktional vorhanden sind.

Insbesondere kann die äußere Raumform der Bolzenaufnahme durch ihre Aufgabe bestimmt sein, insbesondere wenn die Bolzenaufnahme integraler Bestandteil eines Bauteils ist, welches über weitere Funktionen, zum Beispiel einer Kabel- oder Leitungsaufnahme oder dergleichen, verfügt.

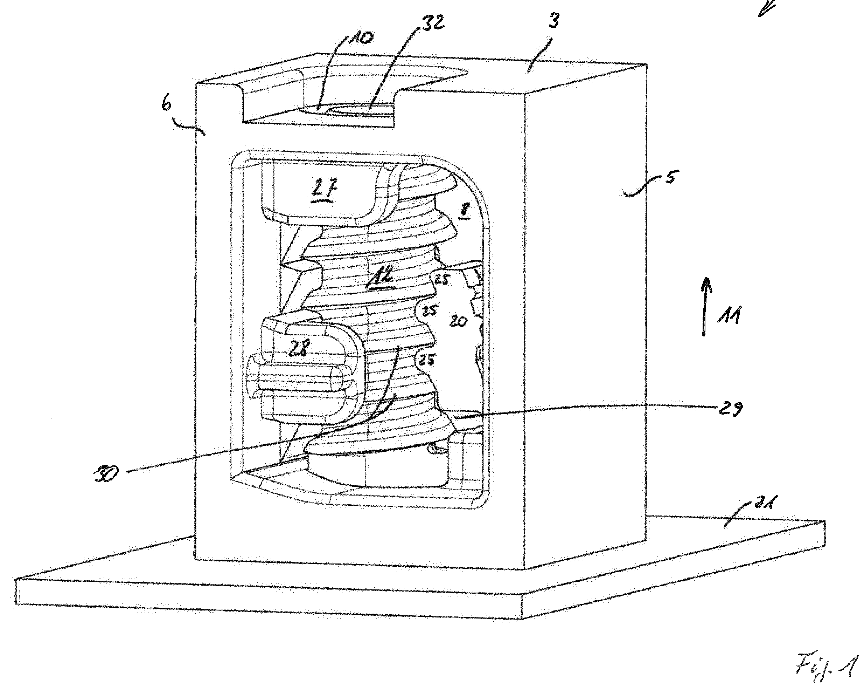

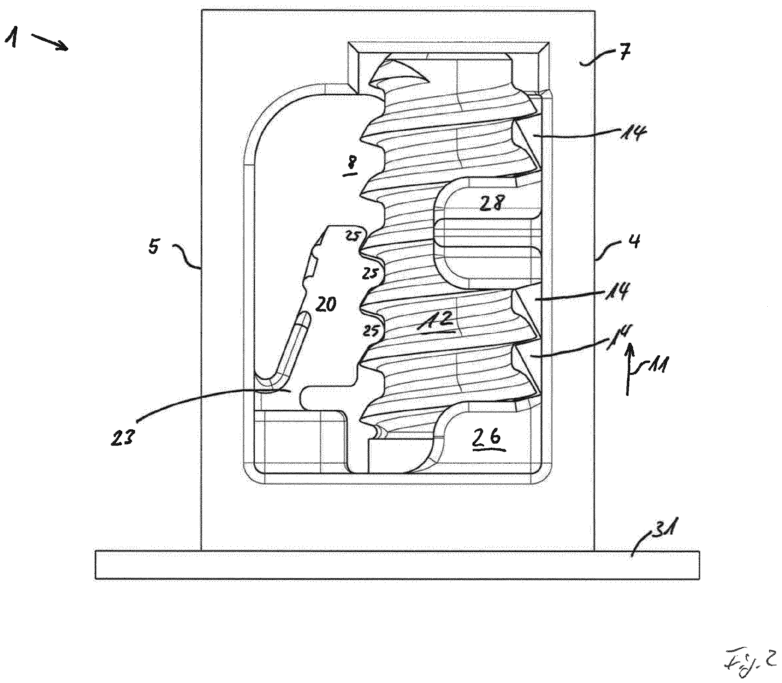

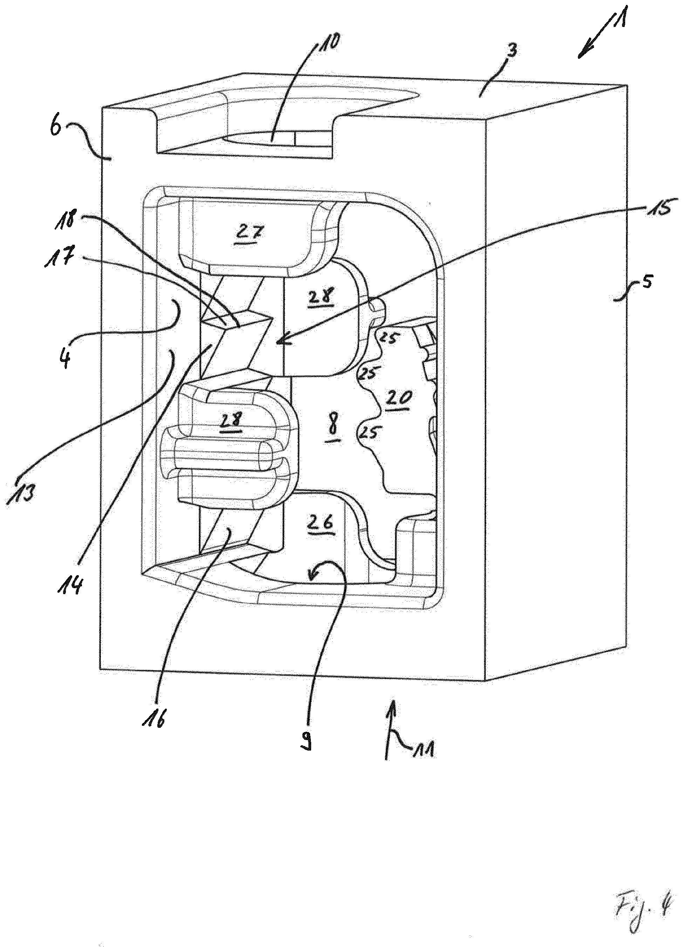

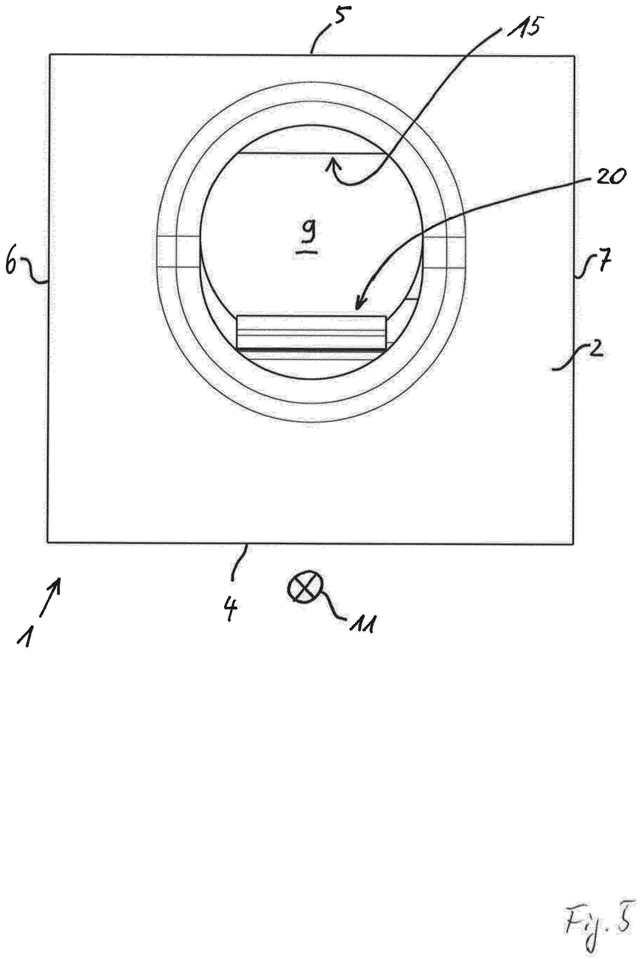

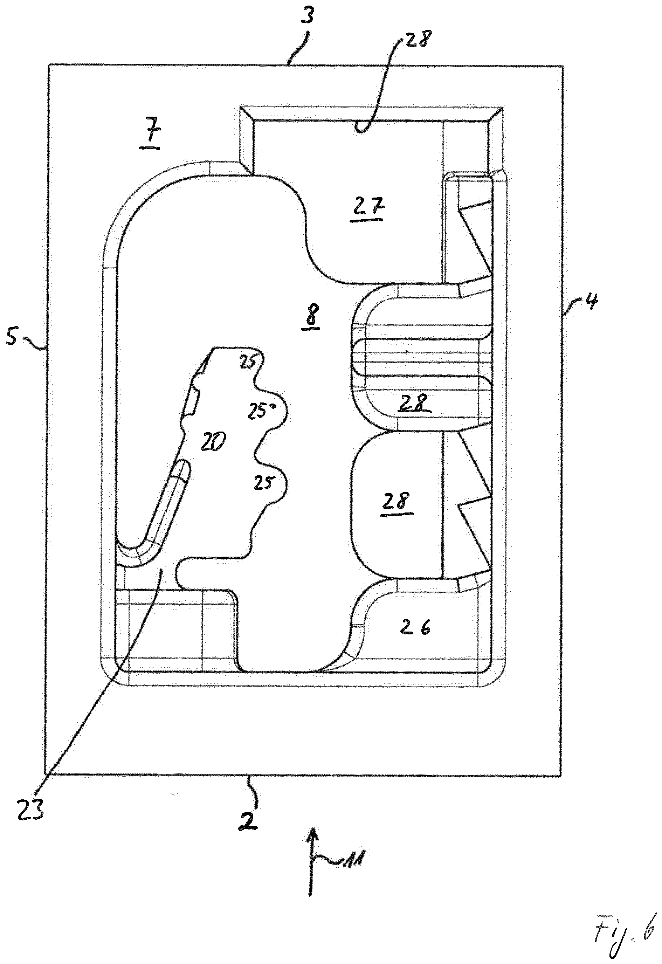

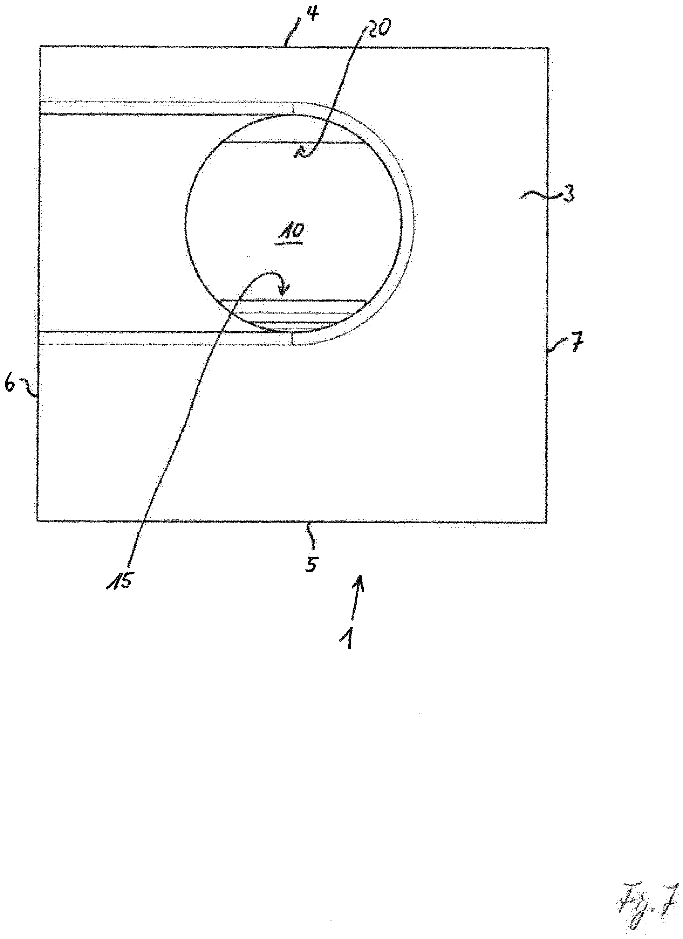

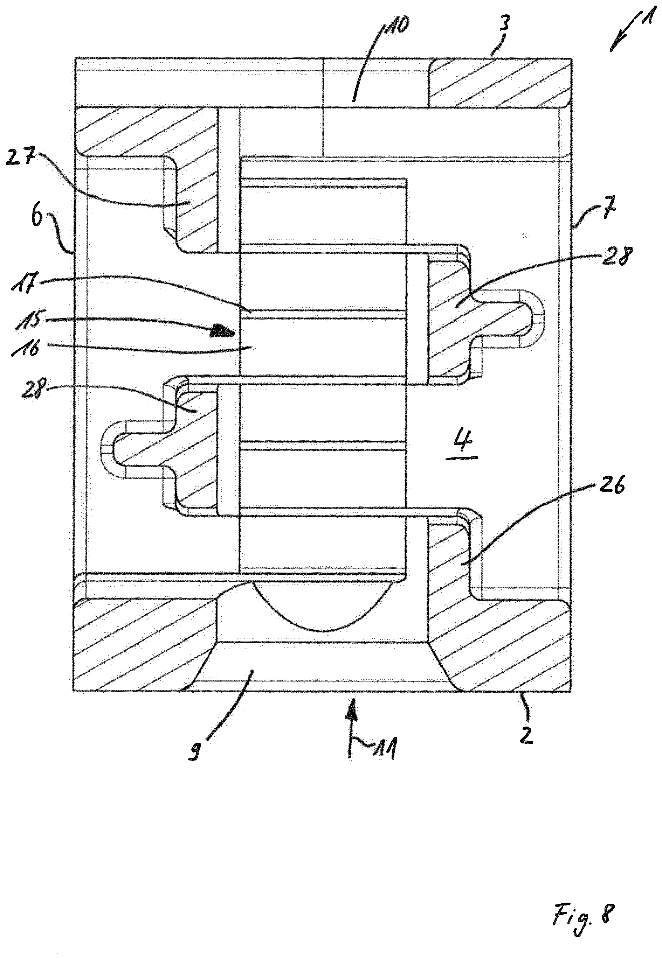

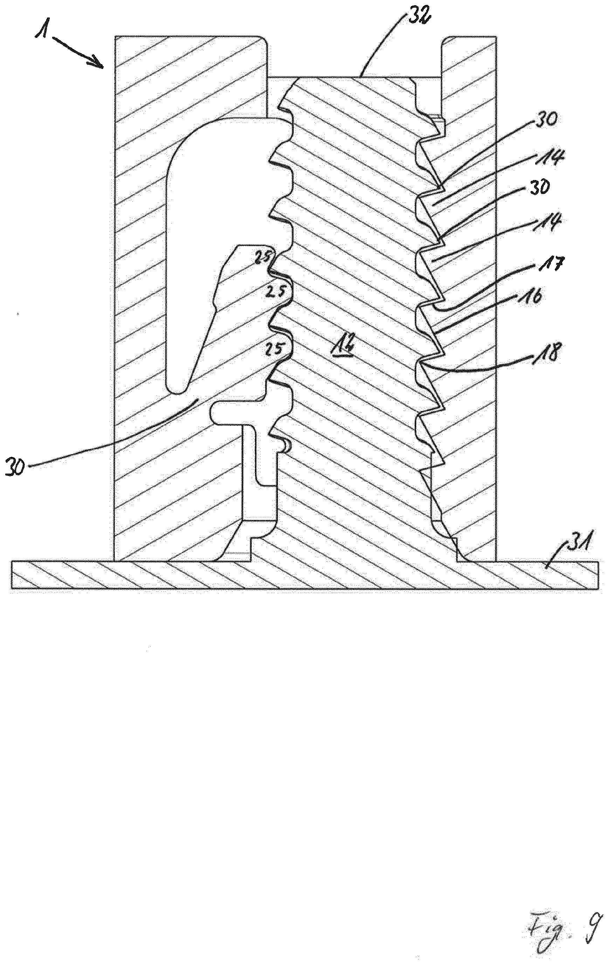

Eine erfindungsgemäße Bolzenaufnahme 1 ist in einer ersten beispielhaften Ausführungsform (Figuren 1 - 9) eine im Wesentlichen kastenartige Anordnung mit einer Bodenplatte 2, einer Deckenplatte 3 sowie zwei gegenüberliegenden ersten Seitenwandungen 4, 5 und senkrecht hierzu zwei gegenüberliegenden zweiten Seitenwandungen 6, 7.

Zwischen den ersten Seitenwandungen und zweiten Seitenwandungen 4, 5; 6, 7 wird ein Aufnahmeraum 8 ausgebildet.

In der Bodenplatte 2 und der Deckenplatte 3 sind je eine Öffnung vorgesehen, wobei in der Bodenplatte 2 eine Einstecköffnung 9 und in der Deckenplatte eine Durchstecköffnung 10 für einen aufzunehmenden Bolzen 12 vorhanden sind.

Die Einstecköffnung 9 in der Bodenplatte 2 und die Durchstecköffnung 10 in der Deckenplatte 3 sind miteinander fluchtend ausgebildet und besitzen einen Durchmesser, der vorzugsweise etwas weiter ist als der Durchmesser eines einzusteckenden Bolzens 12, um den Bolzen in der Einstecköffnung und der Durchstecköffnung während des Einsteckens ein laterales Spiel zu erlauben.

An der dem Aufnahmeraum 8 zuweisenden inneren Fläche 13 einer ersten Seitenwandung 4 ist ein in den Aufnahmeraum 8 mit Zähnen 14 vorspringendes Sägezahnprofil 15 angeordnet. Das Sägezahnprofil 15 erstreckt sich dabei in Einsteckrichtung 11 zwischen der Einstecköffnung 9 und der Durchstecköffnung 10.

Die Zähne 14 sind dabei mit langen flachen Flanken 16 und kurzen steilen Flanken 17 ausgebildet, wobei die daraus resultierende gemeinsame Zahnkante 18 quer zur Einsteckrichtung 11 ausgebildet ist.

Die Zähne 14 ragen dabei in den Aufnahmeraum 8 zwischen der Einstecköffnung 9 und der Durchstecköffnung 10 hinein.

Im Bereich der gegenüberliegenden ersten Seitenwandung 5 bzw. deren Innenseite 19 ist ein Rückhaltearm 20 angeordnet. Der Rückhaltearm ist in einem unteren, d.h. der Bodenplatte 2 näheren Bereich 21 mit einem Filmscharnier 23 an einer Innenfläche 19 der Wandung 5 und/oder einer Erhöhung 22, die podestartig in den Aufnahmeraum 8 von der Bodenplatte 2 vorsteht, gelenkig angelenkt, während ein freies Ende 24 in den Aufnahmeraum 8 und insbesondere in die Flucht zwischen der Einstecköffnung 9 und der Durchstecköffnung 10 hineinragt.

Der Rückhaltearm 20 besitzt dem Sägezahnprofil 15 und damit der ersten Seitenwandung 4 bzw. deren Innenfläche 13 zugewandt, zumindest einen Eingriffsvorsprung 25, insbesondere jedoch eine Mehrzahl von Eigriffvorsprüngen 25, die abgerundet zahnartig oder im Querschnitt wellenförmig ausgebildet sind.

Der Abstand der Scheitel der Eingriffsvorsprünge 25 einerseits und der Abstand der Kanten 18 der Zähne 14 andererseits entspricht dabei vorzugsweise dem Abstand der Gewindegänge eines Bolzens mit Gewinde oder dem Abstand der Zahngründe bei einem mit einer umlaufenden Zahnung ausgebildeten Profilbolzen.

Seitlich, bezogen auf die Einsteckrichtung, sind in Einsteckrichtung 11 zueinander versetzt Führungslappen beidseitig der Flucht der Einstecköffnung 9 und Durchstecköffnung 10 angeordnet. Hierbei steht beispielsweise ein erster Führungslappen 26 von einer Innenfläche der Bodenplatte benachbart zum Sägezahnprofil vor und kann insbesondere auch über Eck an der Innenfläche 13 der ersten Seitenwandung 4 angeordnet sein. Ein zweiter Führungslappen 27 steht von einer inneren 28 der Deckenwandung bzw. Deckenplatte 3 seitlich neben dem Sägezahnprofil 15 in den Aufnahmeraum vor und kann hierbei ebenfalls über Eck mit der inneren Fläche 13 der ersten Seitenwandung 4 verbunden sein.

In Ergänzung hierzu können weitere, dritte Führungslappen 28 an unterschiedlichen Seiten des Sägezahnprofils 15, bezogen auf die Einsteckrichtung 11 versetzt zueinander von der inneren Fläche 13 in den Aufnahmeraum 8 vorstehend ausgebildet sein.

Die Führungslappen 26, 27, 28, insbesondere also vier Führungslappen, können bezogen auf die Einsteckrichtung 11 somit alternierend angeordnet sein und in Seitenansicht mit oder ohne Überdeckung angeordnet sein.

Wie bereits ausgeführt, ist die äußere Raumform der beschriebenen Ausführungsform nur beispielhaft und nicht wesentlich, jede Raumform ist geeignet, welche es ermöglicht, dass die beschriebenen Funktionselemente und vor allem das Sägezahnprofil 15 und der gegenüberliegende Rückhaltearm 20, welcher diametral gegenüberliegend entlang einer fluchtenden Achse der Einstecköffnung 9 und Durchstecköffnung 10 angeordnet sind, ihre Aufgabe erfüllen können. Darüber hinaus sind im beschriebenen Beispiel die Wandungen 6 und 7 mit Durchbrechungen zum Aufnahmeraum 8 hin ausgebildet, wobei eine solche Formgebung ebenfalls nicht Wesentlich ist, sondern insbesondere bei Spritzspressverfahren der Ausbildung der Funktionselemente im Innenraum dient.

Es ist selbstverständlich im Rahmen der Erfindung auch möglich, insbesondere die Führungslappen nicht als separate Bauteile, sondern durch die Seitenwandungen 6, 7 selbst auszubilden.

Für die Funktionalität des Rückhaltearms 20 ist lediglich wesentlich, dass dieser so in den Aufnahmeraum 28 vorsteht und derart angelenkt ist, dass er bei dem Einstecken eines Bolzens 12 durch die Gewindegänge eines Bolzes 12 auslenkbar ist und bei einer Rückzugsbewegung durch seine Anlenkung an den Hauptkörper der Bolzenaufnahme 1 in die Gewindegänge eines Bolzens 12 einschwenkt.

Nachfolgend wird die Funktionsweise erläutert.

Wird ein Bolzen 12 mit Gewindegängen 29 und einer hierdurch ausgebildeten Mehrzahl von Gewindekämmen 30 entsprechend der Einsteckrichtung 11 in die Einstecköffnung 9 eingesteckt, wird dieser Bolzen seitlich vom ersten Führungslappen 26 geführt und gelangt in den Bereich des Sägezahnprofils 15. Mit einem ersten Gewindegang bzw. einem ersten Gewindekamm 30 gleitet der Bolzen an einer langen Flanke 16 des ersten Zahns 14 entlang und wird dadurch in Richtung zu dem Rückhaltearm 20 bewegt. Da der Rückhaltearm 20 über das Scharnier 23 in den Aufnahmeraum 8 des Bolzens 12 hineinragt, wird der Rückhaltearm 20, sobald der erste Gewindekamm 30 ihn berührt, auch dadurch, dass der Bolzen 12 durch die lange Flanke 16 in die Richtung des Rückhaltearms 20 bewegt wird, in Richtung aus dem Aufnahmeraum 8 heraus lateral verschwenkt.

Gelangt ein Gewindekamm des Bolzens 12 nun über die Kante 18 des Zahnes 14 hinaus, rutscht dieser Gewindekamm 30 und jeder nachfolgende Gewindekamm 30 (da der Rand der Zahnkante 18 vorzugsweise dem Rand der Gewindegänge des Bolzens entspricht), in den Zahngrund zwischen zwei Zähnen 14, insbesondere durch die elastische Rückstellwirkung des Scharniers 23 auf den Rückhaltearm 20.

Zudem gelangt ein Eingriffsvorsprung 25 und beim weiteren Einschieben jeder weitere Eingriffsvorsprung 25 in den Bereich zwischen zwei Gewindekämmen 30 der Gewindegänge 29 des Bolzens 12.

Ist der Bolzen 12 vollständig eingesteckt bzw. die Bolzenaufnahme 1 vollständig auf den Bolzen aufgesteckt, liegt die Bolzenaufnahme mit einer Bodenplatte 2 auf einer Trägerplatte 31 oder einem Trägerelement 31 auf, auf dem der Bolzen von diesem abstehend aufgebracht ist.

Ebenso wie das Sägezahnprofil kurze steile Flanken 17 und lange Flanken 16 aufweist, sind die Eingriffsvorsprünge 25 des Rückhaltearms 20 vorzugsweise so ausgebildet, dass in Einsteckrichtung eine lange Flanke vorhanden ist, sodann der Scheitel des Eingriffsvorsprungs folgt und dann eine steilere Flanke.

Wird nun die Bolzenaufnahme 1 gegen die Einsteckrichtung bewegt, stützt sich der Bolzen diese Bewegung sperrend einerseits an den kurzen Flanken 17 des Sägezahnprofils 15 ab und andererseits an den steilen Flanken der Eingriffsvorsprünge 25, wodurch der Rückhaltearm 20 zudem noch mehr in die Gewindegänge 29 hineingedrückt bzw. gezogen wird und dadurch auch den Bolzen in das Sägezahnprofil 15 hineindrückt. Eine Auszugsbewegung verstärkt somit die Verriegelung bzw. Verbindung zwischen der Bolzenaufnahme 1 und dem Bolzen 12. In vollständig eingestecktem Zustand ist der Bolzen 12 seitlich von den Führungslappen 26, 27 und 28 begrenzt und ragt mit einem freien Ende 32 in die Durchstecköffnung 10 oder durchgreift diese.

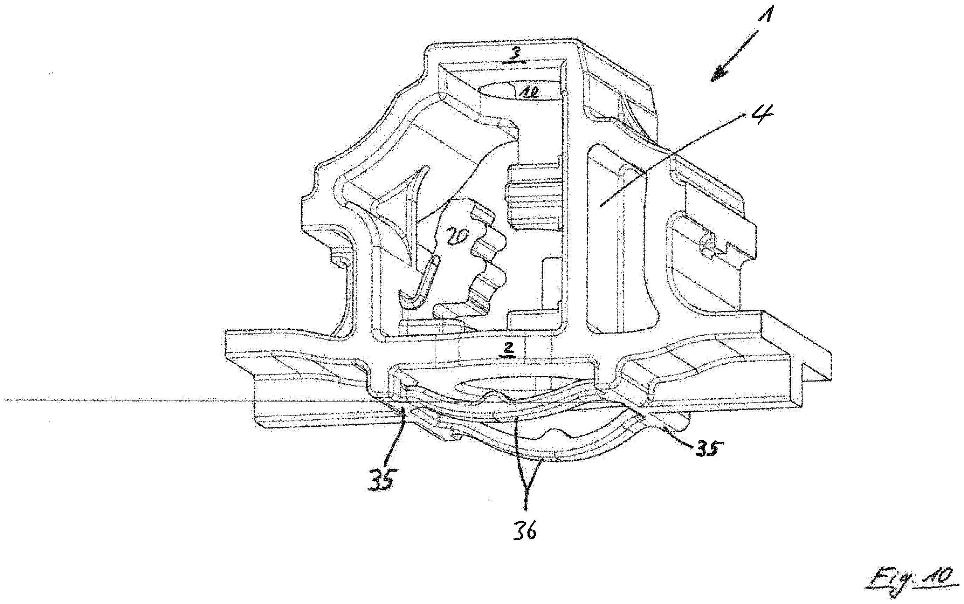

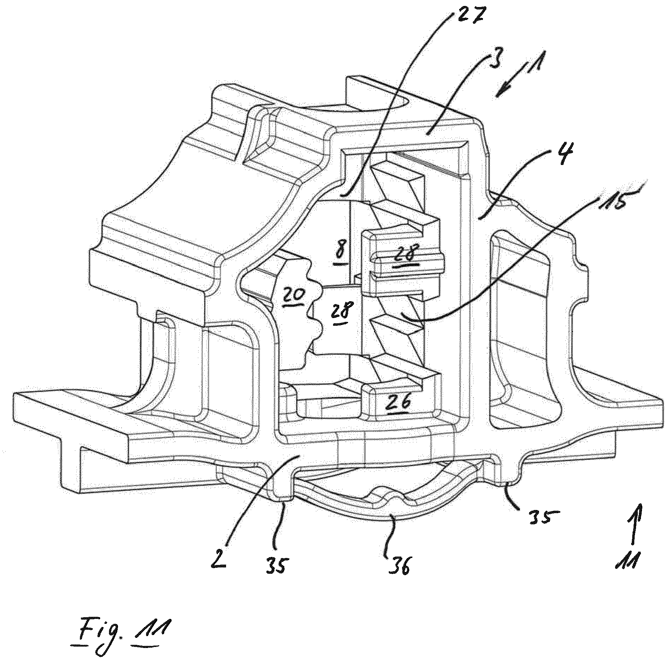

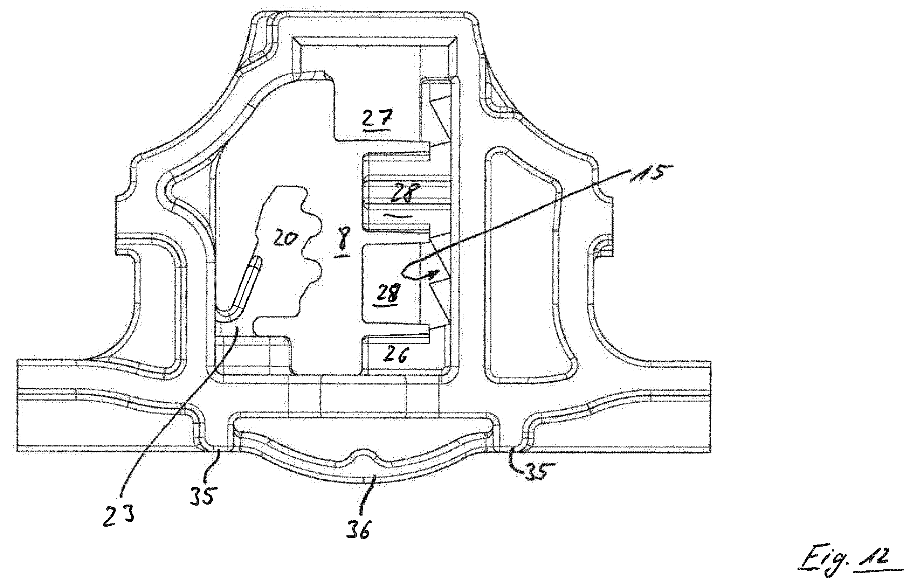

Eine weitere vorteilhafte Ausführungsform (Figuren 10 - 12) zeigt die erfindungsgemäße Anordnung in einer anderen Raumform, wobei hierbei die Bolzenaufnahme 1 in der Darstellung aus einer Gesamtstruktur herausgeschnitten ist, wobei die Gesamtstruktur beispielsweise an der Bolzenaufnahme 1 vorhandene Funktionsbereiche, wie Aufnahme- oder Festlegungsbereiche von Kabeln, Leitungen oder dergleichen, aufweisen kann (nicht gezeigt).

Auch bei dieser Ausführungsform der Bolzenaufnahme 1 sind die grundlegenden Elemente Sägezahnprofil 15 und Rückhaltearm 20 in gleicher Weise ausgebildet, zudem sind Führungslappen 26 - 28 vorhanden, wie selbstverständlich auch eine Einstecköffnung 9 und eine Durchstecköffnung 10.

An der Unterseite einer Bodenplatte 2 sind hierbei Stege oder Kufen 35 ausgebildet, wobei die Stege oder Kufen 35 jeweils etwa in Höhe der Wandungen 4, 5 angeordnet sind oder leicht dazu versetzt angeordnet sind.

Zwischen den Kufen 35 sind Blattfederelemente 36 vorhanden, welche sich gegen die Einsteckrichtung 11 über die Kufen 35 hinaus herauswölben. Anstelle der Blattfedern 36 sind auch alle möglichen anderen Federelemente geeignet solange sie eine Druckfederwirkung von der Bodenplatte 2 weg bewirken.

Auch bei dieser Ausführungsform ist eine erste Seitenwandung 4 ausgebildet, welche sich in Einsteckrichtung von einer Bodenplatte 2 zu einer Deckenplatte 3 erstreckt. Die zweite Seitenwandung 5 besitzt hierbei jedoch keine ebene Raumform, sondern eine Raumform, die durch eine andere Funktion vorbestimmt ist, jedoch ist der Rückhaltearm 20 in gleicher Weise gegenüber dem Sägezahnprofil 15 ausgebildet.

Die Funktionsweise insbesondere beim Einstecken eines Bolzens 12 (nicht gezeigt) ist hierbei identisch zur ersten Ausführungsform, wobei im Unterschied zur ersten Ausführungsform beim Einstecken des Bolzens 12 die Blattfederelemente 36 noch vor den Kufen 35 ein Trägerelement 31 des Bolzens 12 berühren und gegen ihre Federkraft zwischen die Kufen 36 gedrückt werden. Hierdurch wird eine zusätzliche Auszugskraft gegen die Einsteckrichtung 11 ausgeübt, wenn der Bolzen 12 vollständig eingesteckt ist, so dass eben der elastischen Rückstellkraft des Scharniers 23 des Rückhaltearms 20 zusätzlich die Federkraft der Blattfederelemente 36 verriegelnd wirkt.

Neben den Kufen 35 können insbesondere in dem nicht gezeigten Bereich der angesetzten Funktionsbauteile an die Bolzenaufnahme 1 zusätzliche Abstützelemente oder Federelemente vorhanden sein. Darüber hinaus können anstelle der Kufen 35 die Blattfedern 36 auch lediglich zwischen Säulen oder stummelartigen Elementen angeordnet sein.

Die Bolzenaufnahme 1 ist insbesondere aus einem Kunststoff ausgebildet, insbesondere aus einem Kunststoff, der im Spritzpressverfahren formbar ist, so dass insbesondere das Scharnier 23 des Rückhaltearms 20 als Filmscharnier aus dem Material ausgebildet ist. Dies schließt selbstverständlich nicht aus, dass die Bolzenaufnahme auch aus unterschiedlichen Materialien ausgebildet ist.

Bei der Erfindung ist von Vorteil, dass eine leicht zu montierende Bolzenaufnahme geschaffen wird, welche eine sichere Verbindung zwischen der Bolzenaufnahme und einem Bolzen und damit die sichere Anordnung von Funktionsbauteilen und dem Bolzen an einen Trägerelement zulässt, wobei die erfindungsgemäße Bolzenaufnahme in einfacher Weise herstellbar ist und eine hohe Funktionssicherheit und Montagefähigkeit aufweist.

Erfindungsgemäß weist die Bolzenaufnahme einen einfachen und effektiven Aufbau dadurch auf, dass in der Bolzenaufnahme zwei Rastelemente, mit dem Bolzengewinde verrastend zusammenwirkend angeordnet sind, wobei ein Rastelement fest angeordnet ist und das andere Rastelement lateral beweglich angeordnet ist, wobei beim Einstecken des Bolzens das lateral bewegliche Rastelement beim Einstecken ausweichen kann und die Rastelemente derart ausgebildet sind, das bei einer Bewegung des Bolzens gegen die Auszugsrichtung lateral bewegliche Rastelement in das Gewinde hineingezogen wird und dadurch der Raum zwischen den Rastelementen verringert wird, so dass eine sichere Verrastung gewährleistet ist.

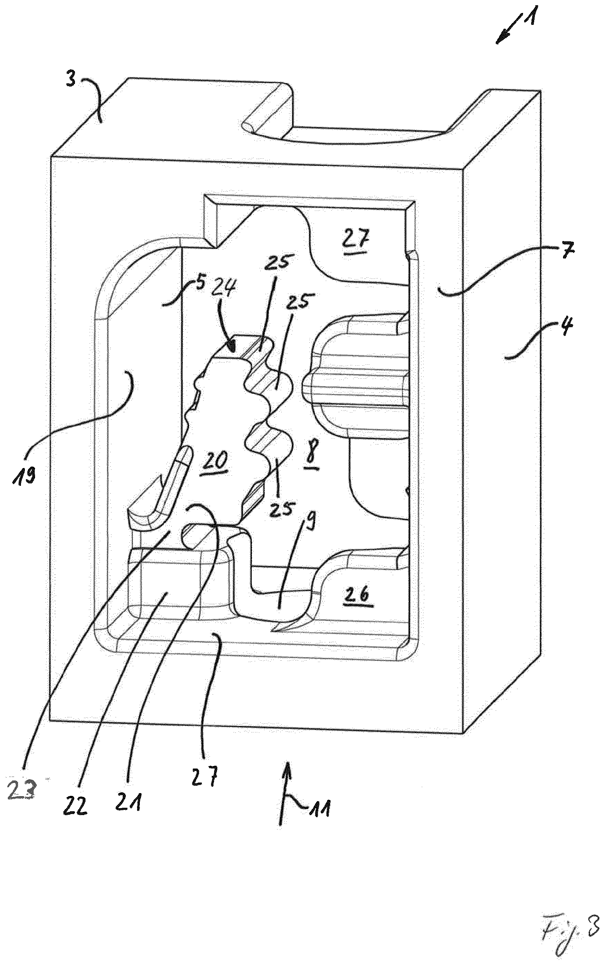

Die Unteransicht der Bolzenaufnahme in Fig.3 ist verkehrt herum gedeutet worden. Im Bild ist die feststehende Wand mit 20 bezeichnet und der bewegliche Rastarm mit 15.

### Bezugszeichen

- 1: Bolzenaufnahme
- 2: Bodenplatte
- 3: Deckenplatte
- 4: erste Seitenwandung
- 5: erste Seitenwandung
- 6: zweite Seitenwandung
- 7: zweite Seitenwandung
- 8: Aufnahmeraum
- 9: Einstecköffnung
- 10: Durchstecköffnung
- 11: Einsteckrichtung
- 12: Bolzen
- 13: innere Fläche
- 14: Zähne
- 15: Sägezahnprofil
- 16: lange Flanke
- 17: kurze steile Flanke
- 18: Zahnkante
- 19: Innenfläche von 5
- 20: Rückhaltearm
- 21: unterer Bereich
- 22: Podest
- 23: Filmharmonie
- 24: freies Ende
- 25: Eingriffsvorsprung
- 26: erste Führungslappen
- 27: zweite Führungslappe
- 28: dritte Führungslappe
- 29: Gewindekamm
- 30: Gewindekamm
- 31: Trägerelement
- 32: freies Ende von 12
- 35: Kufen
- 36: Blattfederelement

## Patentansprüche

1. Bolzenaufnahme zur verriegelnden Aufnahme und Befestigung an einen Bolzen, **dadurch gekennzeichnet, dass** die Bolzenaufnahme (1) zumindest zwei Rastmittel (14, 15; 20, 25) zum verrastenden Festlegen des Bolzens (12) aufweist, wobei ein erstes Rastmittel (15) ein Sägezahnprofil (15) mit zumindest einem Zahn (14) ist, welches fest angeordnet ist und ein zweites Rastmittel (20) ein Rückhaltearm (20) ist, der bezogen auf eine Längsachse eines Bolzens dem ersten Rastmittel (15) diametral gegenüberliegend angeordnet ist und derart angelenkt ist, dass er lateral auf das erste Rastmittel (15) hin und von diesem weg schwenkbar angeordnet ist.

2. Bolzenaufnahme nach Anspruch 1, **dadurch gekennzeichnet, dass** das erste Rastmittel (15) über einen oder mehrere Zähne (14) verfügt, wobei das Profil sich entlang der Einsteckrichtung (11) mit in Einsteckrichtung (11) aufeinanderfolgenden Zähnen (14) erstreckt.

3. Bolzenaufnahme nach Anspruch 1 oder 2, **dadurch gekennzeichnet, dass** das zweite Rastmittel (20) dem ersten Rastmittel (5) zugewandt zumindest ein Eingriffsmittel (25) zum Eingriff in ein Gegeneingriffsmittel (29) des Bolzens (12) besitzt.

4. Bolzenaufnahme nach Anspruch 1 oder 2, **dadurch gekennzeichnet, dass** die Zähne (14) des Sägezahnprofils (15) einen Abstand voneinander aufweisen, die dem Abstand der Gewindekämme (30) eines einzusteckenden Bolzens (12) im Wesentlichen entspricht.

5. Bolzenaufnahme nach einem der vorhergehenden Ansprüche, **dadurch gekennzeichnet, dass** bei einer Mehrzahl von Eingriffsvorsprüngen (25) am Rückhaltearm (20) als zweites Eingriffsmittel (25) die Abstände der Scheitel der Eingriffsvorsprünge (25) dem Abstand der Gewindekämme (30) im Wesentlichen entspricht oder an diesen angepasst ist.

6. Bolzenaufnahme nach einem der vorhergehenden Ansprüche, **dadurch gekennzeichnet, dass** der Abstand der Zähne (14) zueinander einerseits und der Abstand der Eingriffsvorsprünge (25) zueinander andererseits sowie die Position der Eingriffsvorsprünge (25) zu den Zähnen (14) andererseits im verriegelten Zustand so angeordnet ist, dass sowohl die Zähne mit ihren Zahnkanten (18) einerseits als auch die Eingriffsvorsprünge (25) mit ihren Scheiteln andererseits in die Gewindegänge (29) eines einzusteckenden Bolzens (12) eingreifbar angeordnet sind.

7. Bolzenaufnahme nach einem der vorhergehenden Ansprüche, **dadurch gekennzeichnet, dass** die Zähne (14) über eine lange Flanke und über eine kurze steile Flanke (17) verfügen, wobei in Einsteckrichtung zunächst die lange Flanke (16) sich bis zu einer Zahnkante (18) lateral in einen Aufnahmeraum (18) für einen Bolzen (12) erstreckt und anschließend eine kurze Flanke folgt, welche in Einsteckrichtung über eine stärkere Steigung verfügt und/oder die Eingriffsvorsprünge in Einsteckrichtung zunächst eine längere Flanke besitzen und nach dem Scheitel eine kürzere steilere Flanke folgt.

8. Bolzenaufnahme nach einem der vorhergehenden Ansprüche, **dadurch gekennzeichnet, dass** die Bolzenaufnahme (1) zumindest eine Bodenplatte (2) und eine erste orthogonal zu dieser orientierte Seitenwandung (4) besitzt, wobei an der Seitenwandung (4) das Sägezahnprofil (15) ausgebildet ist und in der Bodenplatte (2) eine Einstecköffnung (9) angeordnet ist.

9. Bolzenaufnahme nach einem der vorhergehenden Ansprüche, **dadurch gekennzeichnet, dass** der Rückhaltearm (20) benachbart zur Bodenplatte (2) lateral schwenkbar angeordnet ist und sich in Einsteckrichtung lateral und elastisch schwenkbar auf das Sägezahnprofil (15) hin erstreckt.

10. Bolzenaufnahme nach einem der vorhergehenden Ansprüche, **dadurch gekennzeichnet, dass** zudem eine Deckenplatte (3) gegenüber der Bodenplatte (2) vorhanden ist, wobei in der Deckenplatte fluchtend zur Bodenplatte (2) eine Durchstecköffnung (10) für einen einzusteckenden Bolzen vorhanden ist.

11. Bolzenaufnahme nach einem der vorhergehenden Ansprüche, **dadurch gekennzeichnet, dass** das Sägezahnprofil (15) mit seinen Zähnen (14) und/oder der Rückhaltearm (20) mit zumindest einem Eingriffsvorsprung (25) in die axiale Flucht zwischen der Einstecköffnung (9) und der Durchstecköffnung (10) hineinragt.

12. Bolzenaufnahme nach einem der vorhergehenden Ansprüche, **dadurch gekennzeichnet, dass** seitlich neben dem Sägezahnprofil (15) Führungslappen (26, 27, 28) angeordnet sind, welche im Durchschiebeweg des Bolzens von der Einstecköffnung (9) in die Bolzenaufnahme (1) und/oder zur Durchstecköffnung (10) lateral begrenzt.

13. Bolzenaufnahme nach einem der vorhergehenden Ansprüche, **dadurch gekennzeichnet, dass** ein oder mehr Führungslappen (28) in Einsteckrichtung axial zueinander versetzt und bezüglich der Seiten des Sägezahnprofils (15) alternierend angeordnet sind.

14. Bolzenaufnahme nach einem der vorhergehenden Ansprüche, **dadurch gekennzeichnet, dass** Einführungslappen (26, 27) benachbart zur Einstecköffnung (9) und/oder der Durchstecköffnung (10) angeordnet ist, um einen einzusteckenden Bolzen (12) beim Einstecken und/oder Durchstecken zu führen.

15. Bolzenaufnahme nach einem der vorhergehenden Ansprüche, **dadurch gekennzeichnet, dass** an der Bodenplatte (2) benachbart zur Einstecköffnung (9) Federelemente vorgesehen sind und insbesondere Blattfederelemente (36) vorgesehen sind, welche sich von der Bolzenaufnahme (1) bogenförmig nach außen erstrecken.
